# EUROPEAN PATENT SPECIFICATION

(11) **EP 0 342 630 B1**
(45) Date of publication and mention of the grant of the patent: **19.01.1994**
(21) Application number: 89108844.5
(22) Date of filing: 17.05.1989
(51) Int. Cl.: G10L 5/06

(54) **Speech recognition with speaker adaptation by learning**
Spracherkennung mit Sprecheranpassung durch Lernprozess
Reconnaissance de la parole avec adaptation au locuteur par apprentissage

(30) Priority: 18.05.1988 JP 122559/88
(43) Date of publication of application: 23.11.1989
(73) Proprietor: NEC CORPORATION, Tokyo (JP)
(72) Inventor: Yoshida, Kazunaga c/o NEC Corporation, Minato-ku Tokyo (JP); Watanabe, Takao c/o NEC Corporation, Minato-ku Tokyo (JP)
(74) Representative: VOSSIUS & PARTNER

(56) References cited:
- US-A- 3 191 150
- IBM TECHNICAL DISCLOSURE BULLETIN, vol. 21, no. 8, January 1979, pages 3413-3414, New York, US; C.C. TAPPERT et al.: "Fast training method for speech recognition systems"
- PROCEEDINGS: ICASSP'87, INTERNATIONAL CONFERENCE ON ACOUSTICS, SPEECH, AND SIGNAL PROCESSING, Dallas, Texas, 6th-9th April 1987, vol. 2, pages 633-636, IEEE, New York, US; R. SCHWARTZ et al.: "Rapid speaker adaptation using a probabilistic spectral mapping"
- ICASSP'82, PROCEEDINGS - IEEE INTERNATIONAL CONFERENCE ON ACOUSTICS, SPEECH AND SIGNAL PROCESSING, Paris, 3rd-5th May 1982, vol. 3, pages 1657-1660, IEEE, New York, US; J. JASCHUL: "Speaker adaptation by a linear transformation with optimised parameters"

## Description

The present invention relates to speech recognition apparatus of the speaker adaptation type in which the speech recognition apparatus can be adaptable to different speakers and different circumstances.

There have been conventional methods of recognizing input speech based on a prestored reference pattern representative of a speech pattern of the standard voice. Such methods include DP (dynamic programming) matching method described, for example, in the technical book entitled "Speech Recognition" and publicated by Kyoritsu Shuppan Co., Ltd. pages 101-113 (hereinafter, referred to as "reference 1 "), and Hidden Markov Model (HMM) method described in the publicated paper, Proceeding of The IEEE. Vol. 73, No. 11, page 1625 "Structural Methods in Automatic Speech Recognition" November, 1985.

In the speech recognition apparatus utilizing these methods, when recognizing speech of a particular person different than the speaker used to make the reference pattern (hereinafter, referred to as "particular speaker"), the reference pattern has to be adapted to voice of the particular speaker so as to obtain the high recognition performance, because the speech pattern depends on the particular speaker. Further, when recognizing speech produced in various magnitudes of background noise or transmitted through telephone line, the speech pattern may be considerably deformed to thereby necessitate modification of the reference pattern. Hereinafter, the invention will be described mainly in connection with the case of recognizing the speech of particular speaker, but the invention can be applied to the recognition of speech produced in different circumstrances.

Conventionally, when adapting the speech recognition apparatus to the particular speaker, the particular speaker is previously required to orally produce all of the words to be recognized, and the reference pattern is modified according to the orally produced words. However, when the vocabulary of words to be recognized is rather large, the particular speaker is needed laborious work to orally produce all of the words contained in the recognizeable vocabulary.

In order to eliminate such laborious work, there has been already proposed a method of adapting the reference pattern to the particular speaker according to a small amount of training data speech provisionally produced by the particular speaker. For example, the speaker adaptation based on vector quantization is described in the publicated paper IEEE, ICASSP 86 49.5, page 2643, "Speaker Adaptation Through Vector Quantization" 1986 (hereinafter, referred to as "reference 2").

According to this method, firstly, a codebook for the vector quantization is generated from speech pattern of a reference speaker having standard voice (hereinafter, this codebook is called "the reference codebook"), and then the speech pattern is vector-quantized by using the reference codebook to generate the reference pattern. Before recognizing speech of a particular speaker, the reference codebook is normalized to generate a normalized codebook by using speech pattern of sample words provisionally produced by the particular speaker and selected from the vocabulary to be recognized (hereinafter, this speech pattern is called "training pattern"). The speech of particular speaker can be recognized by using this normalized codebook in place of the reference codebook without modifying the vector-quantized reference pattern. Namely, even if the vocabulary to be recognized is extensive, the speech recognition apparatus can be adapted to the particular speaker by having the particular speaker to provisionally produce part of the vocabulary without producing all of the words belonging to the vocabulary.

Next, the method of making the normalized codebook will be described hereinbelow. Firstly, a training codebook is generated according to the training pattern, and then the training pattern is vector-quantized by using the training codebook. Subsequently, the reference pattern and the training pattern are compared to each other to find the correspondence with respect to the same word in terms of the time-coordinate by using the DP matching. The frequency of code vectors in the training codebook (hereinafter, this code vectors are called "training code vectors") is made correspondence to a given code vector in the reference codebook (hereinafter, this code vector is called "reference code vector") is stored in the form of histogram. The normalized codebook is obtained by weighting the training code vectors and is made correspondence to each reference code vector according to their frequencies in the histogram and by averaging the weighted training code vectors.

However, in the conventional method as described in the reference 2, since the vector quantization is utilized, the reduction of recognition rate is not prevented due to quantization error.

In addition, the variation of speech pattern in different speakers and different circumstances depends or influences due to preceding and succeeding phoneme, that is phonetic environment. Therefore, the conventional conversion method based on one-by-one processing of an individual vector at a given point of the time-coordinate cannot evaluate the influences from the phonetic environment, and therefore cannot carry out the proper conversion.

IBM TECHNICAL DISCLOSURE BULLETIN, vol. 21, no. 8, January 1979, pages 3413-3414, New York, US; C.C. TAPPERT et al.: "Fast training method for speech recognition systems" (reference 4) and ICASSP'82, PROCEEDINGS - IEEE INTERNATIONAL CONFERENCE ON ACOUSTICS, SPEECH AND SIGNAL PROCESSING, PAris, 3rd-5th May 1982, vol. 3, pages 1657-1660, IEEE, New York, US; J. JASCHUL: "Speaker adaptation by a linear transformation with optimised parameters" (reference 5) disclose a speech recognition system in which a reference pattern is previously included, thereby recognizing unspecified speaker's speech. These prior art systems improve the recognition rate of the system by transformation of either the system's reference pattern to a new speaker (ref.4) or of the speech signal of the new speaker (ref.5).

In reference 4, said transformation is performed in accordance with a linear transformation due to a matrix T. Out of a limited set of training data of speakers A and B, the matrix T is determined such that the difference between measurement vectors from the new talker and the transformed measurement vectors from the known talker is minimized by the least squares approximation technique, the individual measurement vectors of talkers A and B being first time-aligned.

Reference 5 discloses three alternative transformation methods: The first method relates to heuristic methods using spectral warping; the second method relates to a linear matrix transformation similar to reference 4, in which the parameters of a matrix are determined by mean square error optimisation; the third method relates to a banded matrix transformation, i.e. a simplified linear matrix transformation, wherein the matrix is restricted to a band of elements along the main diagonal. These transformation methods are directed to a syllable or demi-syllable, which is transformed in accordance with a one-to-one correspondence.

US-A-3,191,150 discloses a specimen identification system for identifying a specimen due to reference patterns. Said system comprises reference storage registers having non-adaptive and adaptive reference patterns, respectively. The adaptation is performed by extracting the difference between the specimen and the reference pattern by a subtracter and then altering the reference pattern in the second storage register on the basis of the difference.

An object of the present invention is to, therefore, realize the speaker adaptation method of high performance which can eliminate the quantization error and can evaluate the influences of the phonetic environment.

This object is solved with the features of the claims.

The speech recognition apparatus of speaker adaptation type according to the first species of invention operates to convert the reference pattern generated according to the voice of standard speaker into the adapted reference (or normalized) pattern of particular speaker by means of the neural network unit, and to recognize the speech of particular speaker according to the normalized pattern. The speech recognition apparatus of speaker adaptation type according to the second species of the invention operates to convert speech inputted by a particular speaker into speech pattern of the standard speaker by means of the neural network unit, and to recognize the converted speech pattern according to the reference pattern of the standard speaker.

The used neural network unit can be comprised of a neuron-like network of the pattern association type described, for example, in the report from Computer Science Department of Carnegie-Mellon University, "Experiments on Learning by Back Propagation" by David C. Plant etc., June 1986 (hereinafter, referred to as "reference 3").

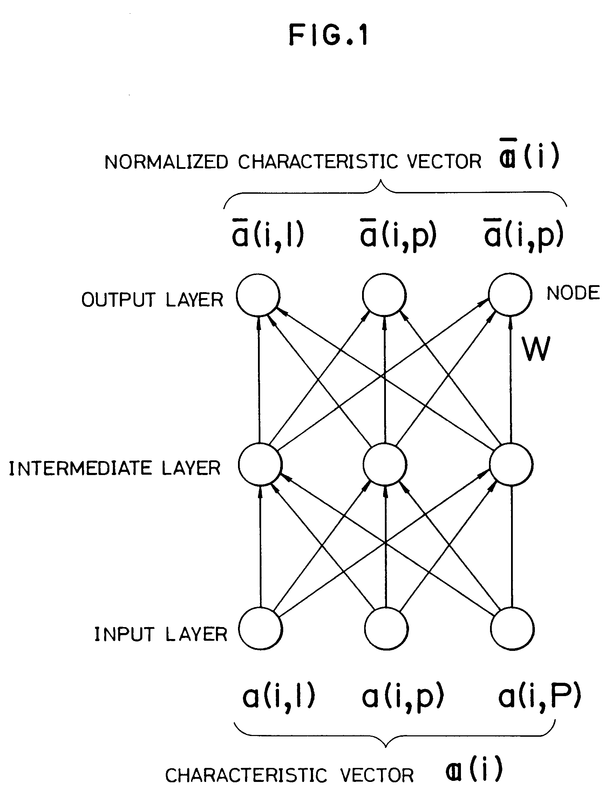

Fig. 1 of the drawing of the present application shows structure of the neural network. As shown in the figure, the neural network has multi-layer structure of an input layer, an intermediate layer and an output layer. The intermediate layer is composed of a single layer as shown in the figure, but may be composed of two or more layers. The intermediate layer may be eliminated.

In the neural network, an output of an individual node is obtained by converting, through a non-linear function, the total value of outputs fed from preceding nodes connected to the individual node and multiplied by weight W. As described above, the conversion characteristic of neural network is determined by the weight W. The value of weight W can be determined by learning.

The speech pattern is obtained by analyzing inputted speech. Various known analyzing methods may be utilized such as Cepstram analysis. Such speech pattern is comprised of a time series of feature vectors as follows: 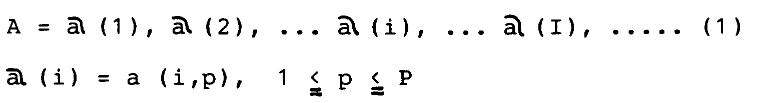 where I indicates a number of frames of the speech pattern, a P indicates a dimension number of the feature vector.

According to the present invention, a feature vector (i) represented in the formula (1) is converted into normalized or adapted feature vector (i) by using the neural network. Namely, when each element a (i,p) of the feature vector (i) is inputted into each node (total number is P) of the input layer, each node of the intermediate and output layers calculates its output and each node (total number is P) of the output layer outputs value of each element a (i,p) of the adapted feature vector (i).

A single feature vector (i) is applied to the input layer in the above described embodiment; however, a plurality of feature vectors (k) (i-ei < k <-_ i+e2, ei ,e₂ is a given integer) arranged in the vicinity of the time point i can be provided concurrently to the input layer. By such operation, it can be possible to carry out the conversion effective to evaluate influence from adjacent phonetic environment by providing the feature vectors including those belonging to several preceding and succeeding frames during the conversion of particular feature vector.

Next, learning method of internal parameter (weight W) of the neural network will be explained hereinbelow. It is assumed that the speech pattern A is to be adapted to another speech pattern B as represented by: 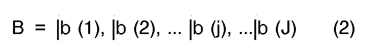 This speech pattern B represents, for example, the same word orally produced by a particular speaker different than the speaker who produces the speech pattern A.

The first step is to find correspondence between the time-coordinate of speech pattern A and the time-coordinate of speech pattern B. Namely, a table j(i) which designates frame j of the speech pattern B corresponding to frame i of the speech pattern A is determined by DP matching in similar manner as described in the reference 2. Further, this matching of time-coordinate can be carried out by small amount of calculation according to the linear expansion and compression process. Namely, the correspondence of time-coordinate can be found according to the following relation:

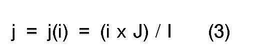

Based on the result of matching or correspondence, the neural network is provided at its input nodes with the speech pattern vector (i), and the neural network learns the internal parameter thereof so as to provide an optimum output similar to corresponding speech pattern vector lb (j(i)) which is a desired output (teaching signal) at that time. This learning is carried out by using back propagation method detailedly described in the reference 3. At this time, a reasonable amount of training speech patterns are repeatedly provided so as to carry out the learning.

### BRIEF DESCRIPTION OF THE DRAWINGS

Fig. 1 is a schematic diagram showing structure of neural network; Fig. 2 is a circuit block diagram showing a first embodiment of the speech recognition apparatus according to the present invention; and
Fig. 3 is a circuit block diagram showing a second embodiment of the speech recognition apparatus according to the present invention.

### DETAILED DESCRIPTION OF THE INVENTION

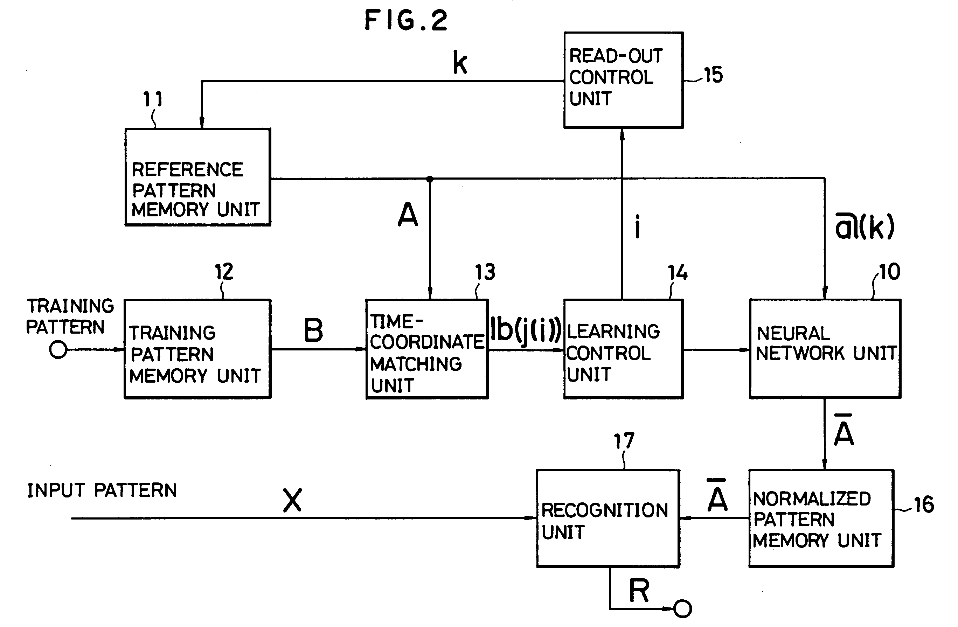

A first embodiment of the present invention is explained hereinbelow in conjunction with the drawings. Fig. 2 is a structural diagram showing the first embodiment of the invention.

Firstly, learning phase is explained, in which a neural network unit 10 learns its internal parameters. A reference pattern which is produced by the standard speaker is prestored in a reference pattern memory unit 11. At first, sample speech pattern of a particular speaker or user (training pattern) is stored into a training pattern memory unit 12. This training pattern is representative of speech pattern which is composed of words constituting a part of (or whole of) the reference pattern.

A time-coordinate matching unit 13 operates to find correspondence of the time-coordinate between reference pattern A read out from the reference pattern memory unit 11 and training pattern B read out from the training pattern memory unit 12 for the same word by means of the DP matching method so as to determine characteristic vector lb (j(i)) of the training pattern B which corresponds to characteristic vector

(i) of the reference pattern A. A learning control unit 14 operates when receiving the characteristic vector lb (j(i)) to output frame number data i to a read-out control unit 15. Then the read-out control unit 15 produces control signal indicative of integer number k (i-e ≤ k i i + e) effective to read out vectors (k) of the reference pattern A in the vicinity of frame i from the reference pattern memory unit 11. When the reference pattern vectors (k) (i-e ≤ k ≤ i+e) are inputted into the neural network unit 10, the learning or training control unit 14 controls the neural network unit 10 by using the characteristic vector lb (j(i)) as teaching signal to train the neural network unit 10 to update its internal parameter to thereby carry out the learning. This learning algorithm uses the back propagation described detailedly in the reference 3.

The above described learning operation is carried out repeatedly for all of the training patterns B so as to continue the learning of internal parameter in the neural network unit 10. After finishing the training of neural network unit 10, all of the reference patterns A stored in the reference pattern memory unit 11 are converted by the neural network unit 11 into adapted or normalized patterns A which are stored in a normalized pattern memory unit 16, to thereby complete the learning phase.

In the recognition phase, inputted speech pattern X of the particular speaker is recognized by a recognition unit 17 based on the normalized pattern A stored in the normalized pattern memory unit 16 so as to output the result R. The recognition method may utilize, for example, the DP matching described in the reference 1. Since the normalized pattern A is already adapted to the particular speaker, no specific process is needed during the recognition of speech of the particular speaker.

It is possible to convert the reference pattern in real time basis by the neural network unit 10 when reading out the same during the recognition operation so as to eliminate the normalized pattern memory unit 16.

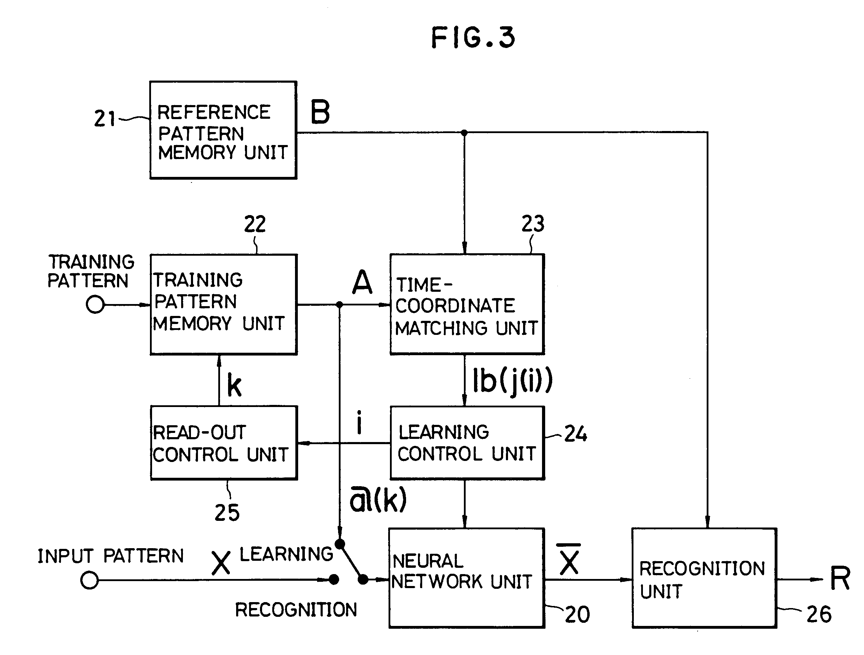

Next, a second embodiment of the invention is explained in conjunction with the drawings. Fig. 3 is a structural diagram showing the second embodiment. Firstly, the learning phase is explained, in which a neural network unit 20 learns its internal parameter. A reference pattern memory unit 21 is prestored with reference patterns produced according to speech of the standard speaker. At first, a training pattern memory unit 22 is written with speech pattern of the particular speaker or user (training pattern). This training pattern is speech pattern composed of words which constitute a part of (or whole of) the reference pattern.

A time-coordinate matching unit 23 operates to find correspondence of the time-coordinate between reference pattern B read out from the reference pattern memory unit 21 and training pattern A read out from the training pattern memory unit 22 for the same word by using the DP matching so as to determine characteristic vector lb (j(i)) of the reference pattern B which corresponds to characteristic vector (i) of the training pattern A. A learning or training control unit 24 operates when the characteristic vector lb (j(i)) is inputted thereinto to output frame number data i to a read-out control unit 25. Then, the read-out control unit 25 outputs a control signal representative of data k (i-e ≤ k i i + e) effective to enable the training pattern memory unit 22 to output vectors (k) of the training pattern A in vicinity of the frame number i. When this training pattern vectors (k) (i-e ≤ k ≤ i + e) are inputted into the neural network unit 20, the training control unit 24 controls the neural network unit 20 to carry out the learning to update the internal parameter thereof by using the characteristic vector lb (j(i)) as teaching signal data. This learning algorithm utilizes the back propagation described detailedly in the reference 3.

The above described learning operation is carried out repeatedly for all of the training patterns A to continue the learning of internal parameter in the neural network unit 20. When the learning of neural network unit 20 is completed, the training or learning phase is finished.

In the recognition phase, inputted speech pattern X of the particular speaker is fed to the neural network unit 20 and converted into normalized speech pattern X. The normalized speech pattern X is recognized by a recognition unit 26 based on the reference pattern B stored in the reference pattern memory unit 21 to thereby output the result R. The recognition method may utilize, for example, the DP matching described in the reference 1.

According to the second embodiment of the present invention, the inputted speech pattern must be converted through the neural network unit during the recognition operation; however, it is not necessary to re-convert the reference pattern even when the reference pattern has been modified due to, for example, change of the vocabulary to be recognized. Accordingly, this embodiment is advantageous when the recognizable vocabulary is frequently changed.

According to the present invention, a high performance speech recognition apparatus of the speaker adaptation can be realized in which the apparatus can be adapted to a new speaker and new circumstance with a relatively small amount of sample speech for adaptation.

## Claims

1. An apparatus for recognizing an inputted speech pattern based on a reference pattern, both consisting of a series of feature vectors and adaptable to different speakers by modifying said reference pattern into an adapted reference pattern through learning operation with a training pattern, comprising a reference pattern memory unit (11) for storing said reference pattern; a neural network unit (10) for converting said reference pattern into said adapted reference pattern through learning operation; a time-coordinate matching unit (13) operative during learning operation of said neural network unit (10) for determining correspondence between time coordinates of inputted training pattern vectors and said reference pattern vectors; a learning control unit (14) operative when said reference pattern vector is inputted into said neural network unit to provide thereto a training pattern vector time-aligned with said reference pattern vector and effective to teach said neural network unit to output said adapted reference pattern vector; a read-out control unit (15) operative during said learning operation of said neural network unit (10) for inputting thereinto said reference pattern vectors within the vicinity of the time-coordinate point of said time-aligned training pattern vector; and a recognition unit (17) for recognizing said inputted speech pattern according to said adapted reference pattern.

2. An apparatus for recognizing an inputted speech pattern based on a reference pattern both consisting of a series of feature vectors and adaptable to different speakers by modifying said inputted speech pattern with respect to said reference pattern according to the result of a learning operation using a training pattern, comprising a reference pattern memory unit (21) for storing said reference pattern; a neural network unit (20) for converting inputted speech pattern into adapted speech pattern according to the result of learning operation; a time-coordinate matching unit (23) operative during said learning operation of said neural network unit (20) for determining correspondence between time coordinates of said reference pattern vectors and inputted training pattern vectors; a learning control unit (24) operative when said training pattern vector is inputted into said neural network unit (20) to provide thereto a reference pattern vector time-aligned with said training pattern vector and effective to teach said neural network unit (20) to output said adapted speech pattern vector; a read-out control unit (25) operative during said learning operation of said neural network unit (20) for inputting thereinto said training pattern vectors within the vicinity of the time-coordinate point of said time-aligned reference pattern vector; and a recognition unit (26) for recognizing said adapted speech pattern according to said reference pattern.

3. An apparatus as claimed in claim 1, further comprising an adapted reference pattern memory unit (16) connected between said neural network unit (10) and said recognition unit (17) for storing said adapted reference pattern.

## Patentansprüche

1. Einrichtung zur Erkennung eines eingegebenen Sprachmusters anhand eines Referenzmusters, die beide aus einer Reihe von Merkmalsvektoren bestehen und an verschiedene Sprecher anpaßbar sind, indem das Referenzmuster durch einen Lernvorgang mit einem Übungsmuster zu einem angepaßten Referenzmuster modifiziert wird, wobei die Einrichtung folgendes aufweist: eine Referenzmusterspeichereinheit (11) zum Speichern des Referenzmusters; eine neurale Netzwerkeinheit (10) zum Umrechnen des Referenzmusters in das angepaßte Referenzmuster mittels Lernvorgang; eine Zeitkoordinatenabgleichseinheit (13), die während des Lernvorgangs der neuralen Netzwerkeinheit (10) zur Bestimmung von Korrespondenz zwischen den Zeitkoordinaten der eingegebenen Übungsmustervektoren und der Referenzmustervektoren aktiv wird; eine Lernsteuerungseinheit (14), die aktiv wird, wenn der Referenzmustervektor in die neurale Netzwerkeinheit eingegeben wird, um einen Übungsmustervektor bereitzustellen, der zeitlich ausgerichtet ist mit dem Referenzmustervektor und so wirksam wird, daß er die neurale Netzwerkeinheit lehrt, den angepaßten Referenzmustervektor auszugeben; eine Ausgabesteuerungseinheit (15), die während des Lernvorgangs der neuralen Netzwerkeinheit (10) zur Eingabe von Referenzmustervektoren, die in der Nähe des Zeitkoordinatenpunkts des zeitlich ausgerichteten Übungsmustervektors liegen, aktiv wird; und eine Erkennungseinheit (17) zur Erkennung des eingegebenen Sprachmusters anhand des angepaßten Referenzsmusters.

2. Einrichtung zum Erkennen eines eingegebenen Sprachmusters anhand eines Referenzmusters, die beide aus einer Reihe von Merkmalsvektoren bestehen und an verschiedene Sprecher anpaßbar sind, indem das eingegebene Sprachmuster in bezug auf das Referenzmuster anhand des Ergebnisses eines Lernvorgangs unter Verwendung eines Übungsmusters modifiziert wird; mit einer Referenzmusterspeichereinheit (21) zum Speichern des Referenzmusters; einer neuralen Netzwerkeinheit (20) zum Umrechnen des eingegebenen Sprachmusters in das angepaßte Sprachmuster anhand des Ergebnisses des Lernvorgangs; einer Zeitkoordinatenabgleichseinheit (23), die während des Lernvorgangs der neuralen Netzwerkeinheit (20) zur Bestimmung von Korrespondenz zwischen Zeitkoordinaten der Referenzmustervektoren und eingegebenen Übungsmustervektoren aktiv wird; einer Lernsteuerungseinheit (24), die aktiv wird, wenn der Übungsmustervektor in die neurale Netzwerkeinheit (20) eingegebenen wird, um einen Referenzmustervektor, der zeitlich ausgerichtet ist mit dem Übungsmustervektor, bereitzustellen, und wirksam wird, um die neurale Netzwerkeinheit (20) zu lehren, den angepaßten Sprachmustervektor auszugeben; einer Ausgabesteuerungseinheit (25), die während des Lernvorgangs der neuralen Netzwerkeinheit (20) zur Eingabe der Übungsmustervektoren, die sich in der Nähe des Zeitkoordinatenpunkts des zeitlich ausgerichteten Referenzmustervektors befinden, aktiv wird; und mit einer Erkennungseinheit (26) zur Erkennung des angepaßten Sprachmusters anhand des Referenzmusters.

3. Einrichtung nach Anspruch 1, die ferner eine angepaßte Referenzmusterspeichereinheit (16) aufweist, die zwecks Speicherung des angepaßten Referenzmusters zwischen die neurale Netzwerkeinheit (10) und die Erkennungseinheit (17) geschaltet ist.

## Revendications

1. Appareil pour reconnaître un motif de la parole entré, basé sur un motif de référence, tous deux étant constitués d'une série de vecteurs caractéristiques et adaptables à des interlocuteurs différents en modifiant ledit motif de référence pour donner un motif de référence adapté par une opération d'apprentissage avec un motif d'apprentissage, comprenant une unité (11) de mémoire de motif de référence pour stocker ledit motif de référence; une unité de réseau neural (10) pour convertir ledit motif de référence en ledit motif de référence adapté par une opération d'apprentissage; une unité (13) d'adaptation de coordonnées temporelles fonctionnant pendant l'opération d'apprentissage de ladite unité de réseau neural (10) afin de déterminer une correspondance entre les coordonnées temporelles des vecteurs des motifs d'apprentissage entrés et lesdits vecteurs de motif de référence; une unité (14) de commande d'apprentissage fonctionnant lorsque ledit vecteur de motif de référence est entré dans ladite unité de réseau neural pour lui fournir un vecteur de motif d'apprentissage aligné dans le temps avec ledit vecteur de motif de référence et efficace pour indiquer à ladite unité de réseau neural de sortir ledit vecteur de motif de référence adapté; une unité (15) de commande de lecture fonctionnant pendant ladite opération d'apprentissage de ladite unité de réseau neural (10) pour y entrer lesdits vecteurs de motif de référence dans le voisinage du point des coordonnées temporelles dudit vecteur de motif d'apprentissage aligné dans le temps, et une unité de reconnaissance (17) pour reconnaître ledit motif de la parole entré, en conformité avec ledit motif de référence adapté.

2. Appareil pour reconnaître un motif de la parole entré, basé sur un motif de référence, tous deux étant constitués d'une série de vecteurs caractéristiques et adaptables à des interlocuteurs différents en modifiant ledit motif de la parole entré par rapport audit motif de référence en conformité avec le résultat d'une opération d'apprentissage utilisant un motif d'apprentissage, comprenant une unité de mémoire de motif de référence (21) pour stocker ledit motif de référence; une unité de réseau neural (20) pour convertir un motif de la parole entré en un motif de la parole adapté en conformité avec le résultat de l'opération d'apprentissage; une unité d'adaptation de coordonnées temporelles (23) fonctionnant pendant ladite opération d'apprentissage de ladite unité de réseau neural (20) pour déterminer une correspondance entre les coordonnées temporelles desdits vecteurs de motif de référence et desdits vecteurs de motif d'apprentissage entrés; une unité de commande d'apprentissage (24) fonctionnant lorsque ledit vecteur de motif d'apprentissage est entré dans ladite unité de réseau neural (20) pour lui fournir un vecteur de motif de référence aligné dans le temps avec ledit vecteur de motif d'apprentissage et efficace pour indiquer à ladite unité de réseau neural (20) de sortir ledit vecteur de motif de la parole adapté; une unité de commande de lecture (25) fonctionnant pendant ladite opération d'apprentissage de ladite unité de réseau neural (20) pour y entrer lesdits vecteurs de motif d'apprentissage dans le voisinage du point des coordonnées temporelles dudit vecteur de motif de référence aligné dans le temps; et une unité de reconnaissance (26) pour reconnaître ledit motif de la parole adapté en conformité avec ledit motif de référence.

3. Appareil selon la revendication 1, comprenant en outre une unité de mémoire de motif de référence adapté (16) montée entre ladite unité de réseau neural (10) et ladite unité de reconnaissance (17) pour stocker ledit motif de référence adapté.
